(19)

**Europäisches Patentamt**
**European Patent Office**
**Office européen des brevets**

(11) **EP 4 787 293 A1**

(12) **EUROPEAN PATENT APPLICATION**
published in accordance with Art. 153(4) EPC

(43) Date of publication:
**05.08.2026 Bulletin 2026/32**

(21) Application number: **24871620.1**

(22) Date of filing: **23.08.2024**

(51) International Patent Classification (IPC):
*G06T 7/00* (2017.01)        *G06T 7/11* (2017.01)
*G06V 10/82* (2022.01)

(52) Cooperative Patent Classification (CPC):
**G06T 7/00; G06T 7/11; G06V 10/774; G06V 10/82**

(86) International application number:
**PCT/JP2024/029941**

(87) International publication number:
**WO 2025/069818 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  JP 2023168380**

(71) Applicant: **Hitachi, Ltd.**
**Tokyo 100-8280 (JP)**

(72) Inventors:
• **KAKISHITA, Yasuki**
**Tokyo 100-8280 (JP)**
• **HATTORI, Hideharu**
**Tokyo 100-8280 (JP)**

(74) Representative: **Mewburn Ellis LLP**
**Aurora Building**
**Counterslip**
**Bristol BS1 6BX (GB)**

(54) **MACHINE LEARNING SUPPORT DEVICE, MACHINE LEARNING SUPPORT METHOD, AND MACHINE LEARNING SUPPORT PROGRAM**

(57) The present embodiment generates images for accurately and efficiently performing additional training of an identification model. A machine learning device 101 generates additional training image. An identification model has been trained using a plurality of base images acquired under a first image acquisition condition. The machine learning device 101 includes: an image input unit 201 that receives an additional image acquired under a second image acquisition condition; an image state feature calculation unit 202 that calculates a second image state feature of the additional image; an image state feature control unit 204 that generates a third image state feature between a first image state feature of the base images and the second image state feature; a form feature calculation unit 203 that calculates a first form feature based on a form of a subject of the additional image; an image generation unit 205 that generates candidate images on the basis of the third image state feature and the first form feature; and a training unit 207 that determines at least one of the candidate images as an additional training image.

Fig. 3

Training result, additional training sample (group), generated image

## Description

[Technical Field]

The present invention relates to a technology that supports for performing additional training of an identification model that classifies images into classes.

[Background Art]

An art for identifying a class of an image by using an identification model generated by machine learning is known. For example, when machine learning is performed for an identification model by using an image acquired in a certain facility, if identification processing is executed to an image acquired in another facility by using this identification model, acquisition conditions and the like of the images taken in the certain facility and another facility are different, and as compared with identification accuracy of the image acquired in the certain facility, favorable identification accuracy cannot be acquired in some cases.

On the other hand, such an art is disclosed that, by generating an identification model by machine learning by using images acquired by imaging insides of refuse pits of a plurality of facilities and teaching data which is labeled types of the wastes in the image and then, by additionally training an image acquired by imaging an inside of a refuse pit of a second facility different from the plurality of facilities and teaching data which is labeled types of wastes in the image, the identification model is made to correspond to the second facility (see PTL 1, for example).

In addition, such an art is disclosed that, on the basis of a result which determines how the image indicated by image data is seen, a correction parameter used for conversion of an image is generated, the image is converted by using the correction parameter, inference by machine learning is executed for the converted image, teaching data is generated by relating the inference result and the image data to each other, and additional training of the inference model by using the teaching data (see PTL 2, for example).

[Citation List]

[Patent Literature]

[PTL 1]
Japanese Patent Application Publication No. 2023-12094
[PTL 2]
Japanese Patent Application Publication No. 2020-160804

[Summary of Invention]

[Technical Problem]

As described above, in the art disclosed in PTL 1, the additional training of the identification model is performed by images taken in another facility. At this time, if an amount of the acquired images in another facility is small, for example, it becomes over-training, and there is a concern that favorable detection accuracy cannot be obtained. On the other hand, if the amount of the acquired images in another facility is large, there is a concern that the number of processes for associating annotation to those acquired images might become large or the identification accuracy with respect to the images in the facility which have been already learned might be lowered. In addition, the art disclosed in PTL 2 also has a similar problem.

The present invention is made in view of the above-described circumstances and its object is to provide an art of generating an image for performing the additional training of the identification model accurately and efficiently.

[Solution to Problem]

In order to achieve the above-described object, a machine learning support device according to an aspect is a machine learning support device for generating an additional training image trained for performing additional training of an identification model that identifies a class into which an image is classified, in which the identification model is trained by using a plurality of base images acquired under a first image acquisition condition, and includes: a receiving unit that receives an additional image acquired under a second image acquisition condition to be an identification target with the identification model; an image state feature calculation unit that calculates a second image state feature based on an image state of the additional image; an image state feature control unit that generates one or more third image state features, which are feature between a first image state feature based on the image state of the base image and the second image state feature; a form feature calculation unit that calculates a first form feature based on a form of a subject of the additional image; an image generation unit that generates one or more candidate images on the basis of one or more of the third image state feature and the first form feature; and an additional training image determination unit that determines at least one of the candidate images as the additional training image, in which the image state includes at least one state of brightness, contrast, color (hue and/or chroma), a degree of blur, a noise amount, and resolution of an image.

[Advantageous Effects of Invention]

According to the present invention, an image for performing additional training of an identification model accurately and efficiently can be generated.

[Brief Description of Drawings]

[Fig. 1A]

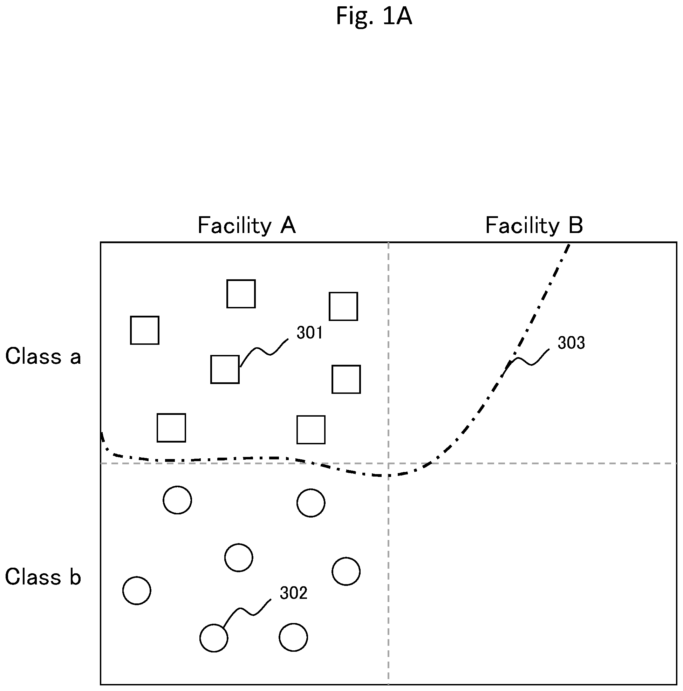

Fig. 1A is a diagram for explaining a first example of identification of images using an identification model according to a conventional example.
[Fig. 1B]

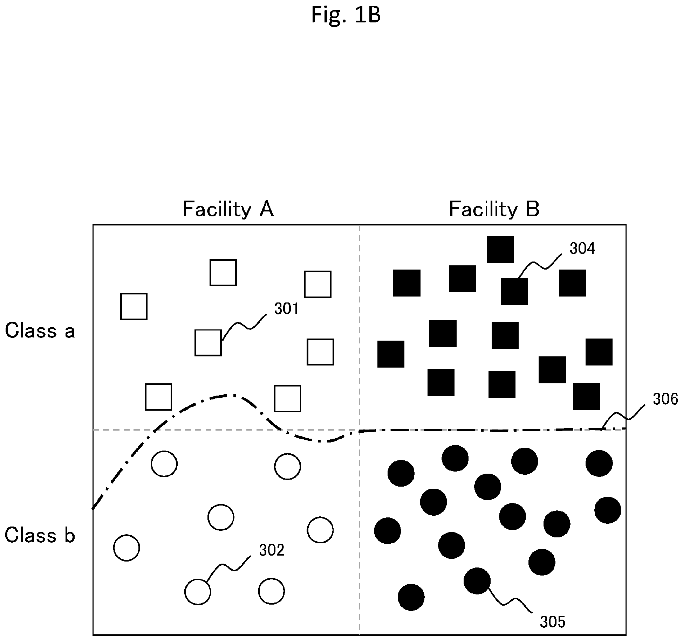

Fig. 1B is a diagram for explaining a second example of identification of images using an identification model according to a conventional example.
[Fig. 1C]

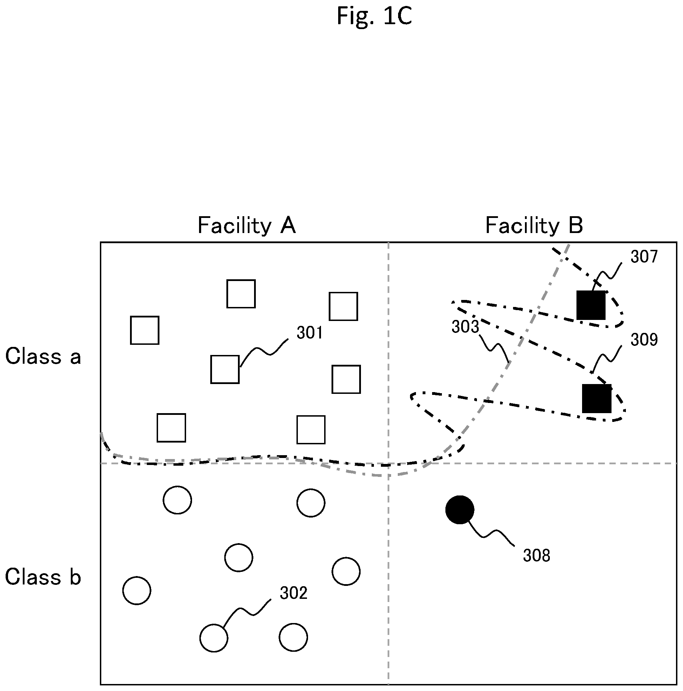

Fig. 1C is a diagram for explaining a third example of identification of images using an identification model according to a conventional example.
[Fig. 1D]

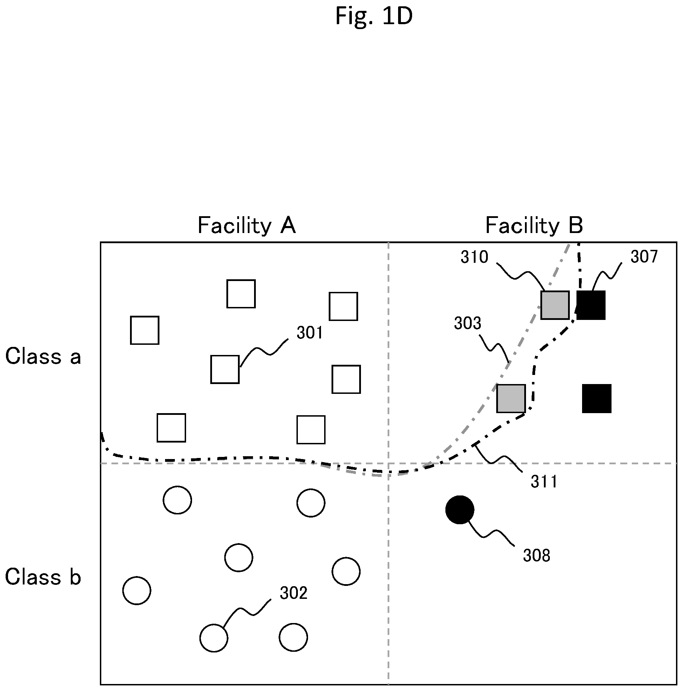

Fig. 1D is a diagram for conceptually explaining identification using an identification model according to an Embodiment.
[Fig. 2]

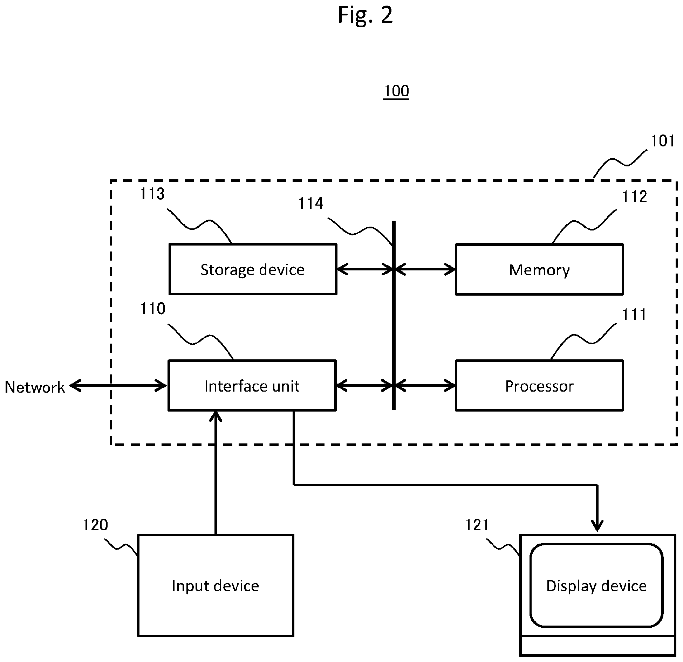

Fig. 2 is a hardware configuration diagram of a machine learning system according to the Embodiment.
[Fig. 3]

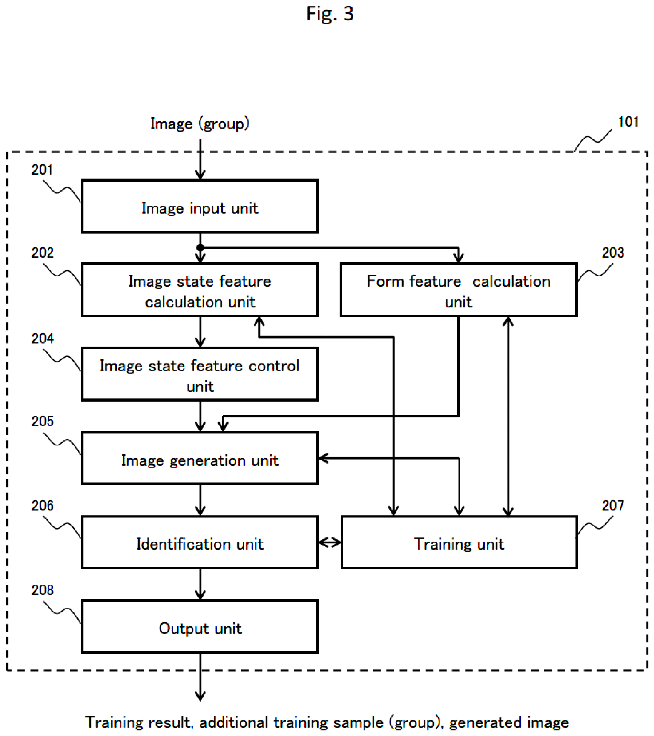

Fig. 3 is a functional configuration diagram of a machine learning device according to the Embodiment.
[Fig. 4]

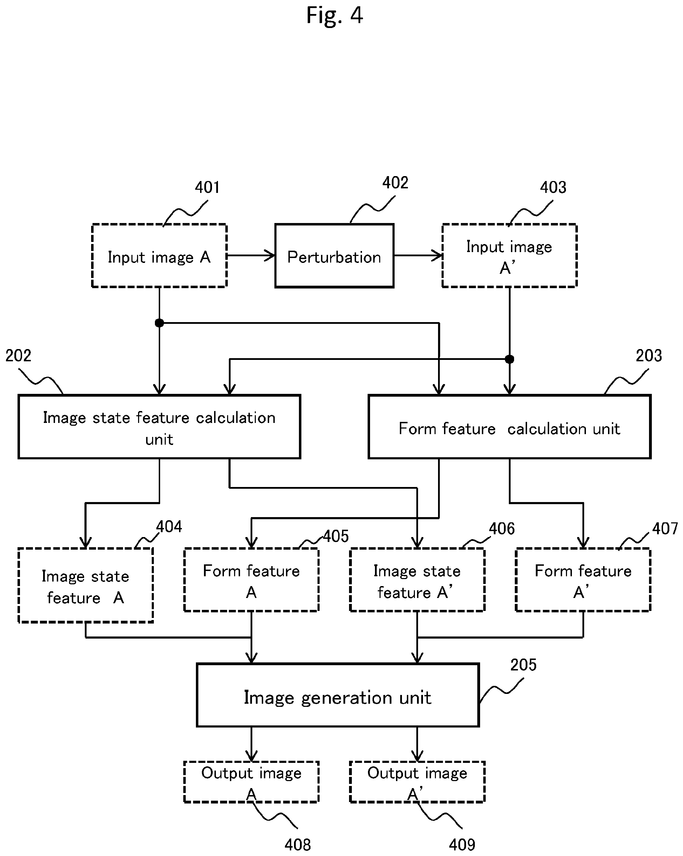

Fig. 4 is a diagram for explaining prior training with respect to an image state feature calculation unit, a form feature calculation unit, and an image generation unit according to the Embodiment.
[Fig. 5]

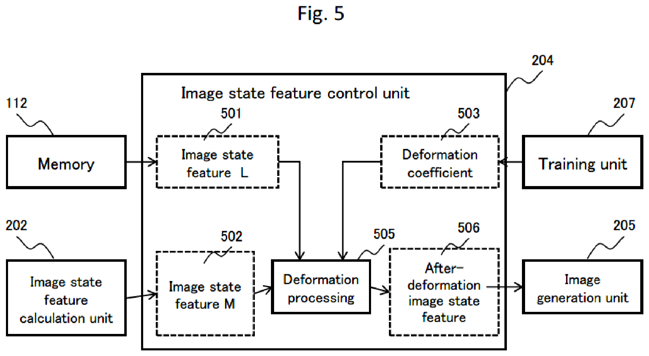

Fig. 5 is a diagram for explaining additional training image determination processing according to the Embodiment.
[Fig. 6A]

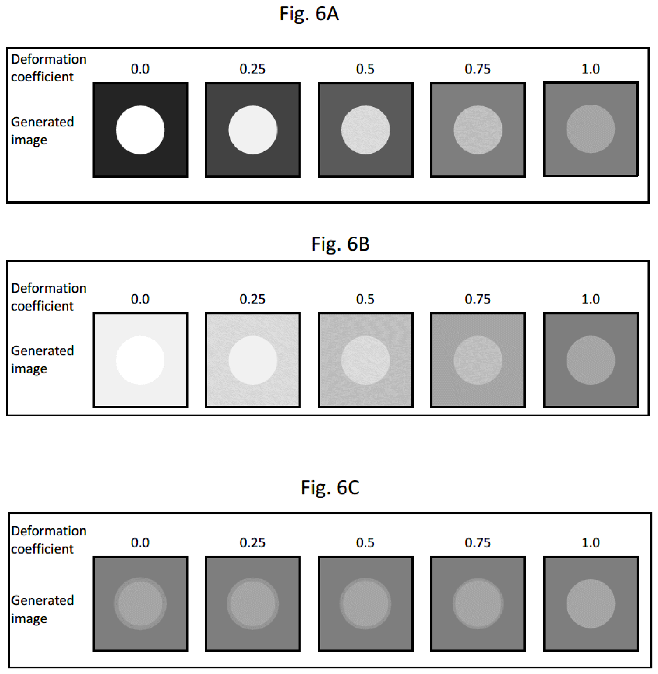

Fig. 6A is a diagram illustrating each image in a case where a contrast of an image is influenced by a change in a deformation coefficient according to the Embodiment.
[Fig. 6B]
Fig. 6B is a diagram illustrating each image in a case where a brightness value of an image is influenced by a change in a deformation coefficient according to the Embodiment.
[Fig. 6C]
Fig. 6C is a diagram illustrating each image in a case where a degree of blur of an image is influenced by a change in a deformation coefficient according to the Embodiment.
[Fig. 7]

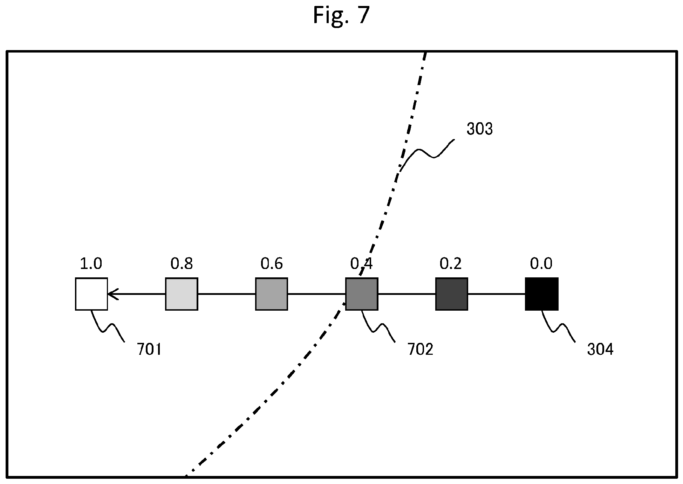

Fig. 7 is a diagram illustrating a relation between an image acquired by a change in a deformation coefficient and an identification surface according to the Embodiment.
[Fig. 8]

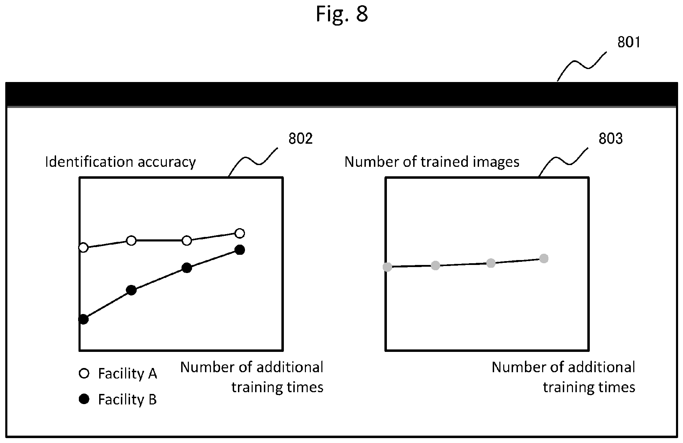

Fig. 8 is a diagram illustrating a result display screen according to the Embodiment.
[Fig. 9]

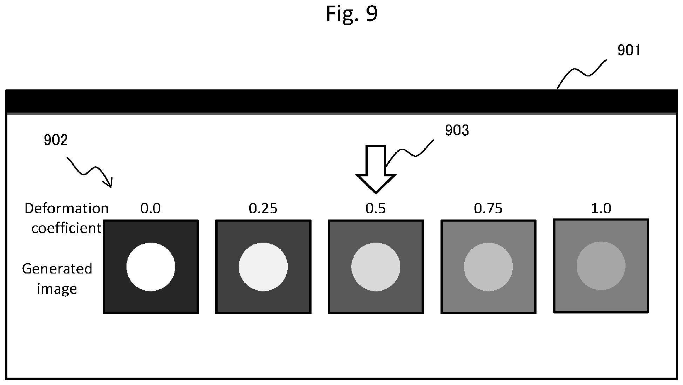

Fig. 9 is a diagram illustrating an additional training image display screen for according to the Embodiment.
[Fig. 10]

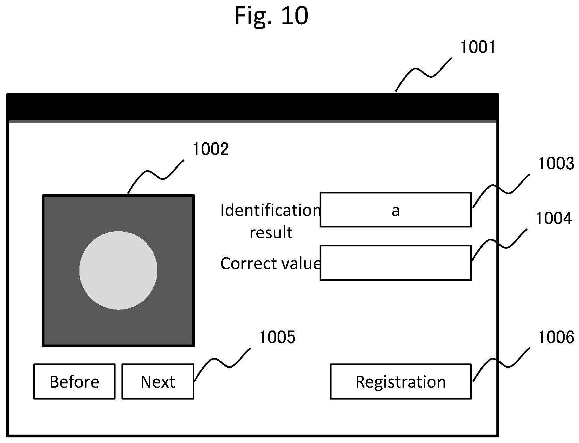

Fig. 10 is a diagram illustrating a correct value configuration screen according to the Embodiment.

[Description of Embodiments]

Embodiments will be explained with reference to the drawings. It is to be noted that the Embodiment explained below does not limit the invention according to the claims, and various elements and all the combinations thereof explained in the Embodiment are not necessarily indispensable for solution of the invention.

When this Embodiment is to be explained, first, identification of an image using a conventional identification model will be explained and then, an outline of an identification model according to this Embodiment will be explained.

Fig. 1A is a diagram for explaining a first example of the identification of images using an identification model according to the conventional example. In Fig. 1A, an area is divided by facilities from which the images are acquired (facilities A, B: an example of an image acquisition condition under which the image is acquired) in a horizontal direction and an area is divided into classes to which the image belongs (classes a, b) in a vertical direction is illustrated, and in the areas, corresponding images are disposed. It is to be noted that the similar display is made also in Fig. 1B to Fig. 1D, which will be described later.

In Fig. 1A, an image 301 belonging to the class a and taken in the facility A is expressed by a white rectangle, and an image 302 belonging to the class b and taken in the facility A is expressed by a white circle.

Fig. 1A illustrates an example of a case in which the machine learning is performed for the identification model by using only the image taken in the facility A. In this case, an identification surface 303 which makes a boundary for identifying whether the image is the class a or the class b in the identification model can be conceptually expressed as shown in Fig. 1A.

As described above, when the machine learning is performed only by the image taken in the facility A, since the image taken in the facility B is not considered, there is a concern that the class of the image cannot be identified properly for the image taken in the facility B.

Subsequently, a case in which additional machine learning (additional training) with images including a large number of images taken in the facility B is performed will be explained.

Fig. 1B is a diagram for explaining a second example of identification of images using an identification model according to a conventional example. Fig. 1B illustrates an example of a case in which an additional machine learning (additional training) with images including a large number of images imaged in the facility B is performed. In Fig. 1B, an image 304 belonging to the class a taken in the facility B is expressed by a black rectangle, and an image 305 belonging to the class b taken in the facility B is expressed by a black circle. In this case, an identification surface 306 which makes a boundary for identifying whether the image is the class a or the class b in the identification model can be expressed as shown in Fig. 1B conceptually.

As shown in Fig. 1B, it takes a lot of labor for preparing a large number of images taken in the facility B and it also takes a labor for applying labels indicating classes to each of the images for performing the additional training.

In addition, when the additional training is performed by using a large number of images taken in the facility B, by means of the identification surface 306, identification accuracy with respect to the image taken in the facility B is improved, but since the identification surface is influenced, there is a concern that the identification accuracy with respect to the image taken in the facility A is lowered.

Subsequently, a case in which, after the machine learning indicated in Fig. 1A is performed, the additional training is performed, with images including a small number of images taken in the facility B.

Fig. 1C is a diagram for explaining a third example of the identification of images using an identification model according to the conventional example. Fig. 1C illustrates an example of a case in which additional training is performed, with images including a small number of images taken in the facility B. In Fig. 1C, an image 307 belonging to the class a taken in the facility B is expressed by a black rectangle, and an image 308 belonging to the class b taken in the facility B is expressed by a black circle. In this case, an identification surface 309 which makes a boundary for identifying whether the image is the class a or the class b in the identification model can be expressed as shown in Fig. 1C conceptually.

As described above, when the additional training is performed only with a small number of images taken in the facility B, the image acquisition state of this image can be largely different from the image taken in the facility A, learning focusing on the image used in the learning (over-training) occurs, and there is a concern that the identification surface 309 might be largely fluctuated with respect to the identification surface 303 before the learning. Thus, the image taken in the facility B cannot be identified generally, and there is a concern that the identification accuracy cannot be improved.

Subsequently, an outline of the identification model according to this Embodiment will be explained.

Fig. 1D is a diagram for conceptually explaining identification using an identification model according to an Embodiment.

Fig. 1D illustrates an example when an image close to the identification surface is generated by bringing the small number of images taken in the facility B closer to the image acquisition state of the image taken in the facility A (color, brightness, and the like, for example), and the additional training is performed with images including the generated images. In Fig. 1D, the image 307 belonging to the class a and taken in the facility B is expressed by a black rectangle, and an image 310 closer to the identification surface 303 generated on the basis of this image is expressed by a gray rectangle. In this case, an identification surface 311 to be a boundary for identifying whether the image is the class a or the class b in the identification model can be conceptually expressed as shown in Fig. 1D.

As described above, when the additional training is performed with the image closer to the identification surface 303, the identification surface 311 which gently enlarges the identification surface 303 can be acquired. Thus, occurrence of the over-learning as shown in Fig. 1C can be reduced, an image taken in the facility B can be generally identified, and the identification accuracy can be improved.

Subsequently, a machine learning system according to the Embodiment will be explained.

Fig. 2 is a hardware configuration diagram of the machine learning system according to the Embodiment.

The machine learning system 100 includes a machine learning device 101 as an example of the machine learning support device, an input device 120, and a display device 121.

The input device 120 is a mouse, a keyboard, and the like, for example, and receives an input of information by the user. The display device 121 is a display, for example, and displays/outputs a user interface (screen) including various types of information.

The machine learning device 101 is configured by a computer such as a PC (Personal Computer), a general-purpose server and the like, for example, and includes an interface unit 110, a processor 111, a memory 112, a storage device 113, and a bus 114. The interface unit 110, the processor 111, the memory 112, and the storage device 113 are coupled capable of communication via the bus 114.

The interface unit 110 includes an interface such as a wired LAN card, a wireless LAN card or the like, for example, and communicates with the other devices via the network. The interface unit 110 can receive various types of images via a network. In addition, the interface unit 110 receives information from the input device 120 and delivers it to the processor 111. Furthermore, the interface unit 110 causes the display device 121 to display various types of screens in accordance with an instruction by the processor 111.

The processor 111 executes various types of processing in accordance with a program stored in the memory 112 and/or the storage device 113.

The memory 112 is a RAM (RANDOM ACCESS MEMORY), for example, and stores programs executed by the processor 111 and necessary information.

The storage device 113 is a hard disk, a flash memory or the like, for example, and stores a program (machine learning support program) executed by the processor 111 and data used by the processor 111. In this Embodiment, the storage device 113 stores training data (a set of an image and a class name of the image: base training data) and evaluation data (a set of an image and a class name of the image: evaluation image) on a plurality of images acquired in the facility A, an image acquired in the facility B, training data on the generated additional training images (a set of an image and a class name of the image: additional training data) and the like.

Subsequently, a functional configuration of the machine learning device 101 according to the Embodiment will be explained.

Fig. 3 is a functional configuration diagram of the machine learning device according to the Embodiment.

The machine learning device 101 includes an image input unit 201 as an example of a receiving unit, an image state feature calculation unit 202, a form feature calculation unit 203, an image state feature control unit 204, an image generation unit 205, an identification unit 206, a training unit 207, and an output unit 208. Here, each of the functional units (201 to 208) is mainly configured by execution of the program (machine learning support program) by the processor 111.

The image input unit 201 inputs one or more images. In this Embodiment, the image input unit 201 inputs an image (additional image) taken in a facility (facility B) to be an identification target for which identification in the identification unit 206 is performed from the storage device 113, for example. It is assumed that the facility B is a facility different from an image facility (facility A) in which images used for the first training of the identification unit 206 (base training image) is taken. It is to be noted that the image acquisition condition (first image acquisition condition) when the image in the facility A is taken and the image acquisition condition (second image acquisition condition) when the image in the facility B is taken are different in general.

The image state feature calculation unit 202 calculates a feature (image state feature) based on an image state with respect to an input image. Here, the image state means a state on at least one or more of brightness, contrast, color (hue and/or chroma), a degree of blur, a noise amount, resolution of the image. In addition, the image state does not include a state concerning a shape itself in the image. In this Embodiment, an image state feature calculation unit 220 has a model (image state feature calculation model) that calculates an image state feature with respect to the input image and calculates an image state feature (a second image state feature on the additional image, for example) of a input image (an additional image, for example) by using this model. The machine learning processing executed in advance to construct the image state feature calculation model will be described later.

The form feature calculation unit 203 calculates a feature (form feature) based on a form in the input image. Here, the form means a shape of an edge, a curved line part and the like in the image. In this Embodiment, the form feature calculation unit 203 has a model (form feature calculation model) that calculates a form feature with respect to the input image and calculates a form feature (first form feature ) of a input image (an additional image, for example) by using this model. The machine learning processing executed in advance to construct the form feature calculation model will be described later.

The image state feature control unit 204 outputs an image state feature (third image state feature) deformed so as to bring the image state feature of the input image closer to an image state feature based on an image state of one or more base training images. Detailed processing of the image state feature control unit 204 will be described later.

The image generation unit 205 generates an image on the basis of the input image state feature and form feature. In this Embodiment, the image generation unit 205 has a model (image generation model) that generates an image corresponding to the input image state feature and form feature and generates an image corresponding to the input image state feature and form feature by using this model. The machine learning processing executed in advance in order to construct this image generation model will be described later.

The identification unit 206 executes processing of identifying a class of the input image. In this Embodiment, the identification unit 206 has an identification model that identifies a class of an input image and identifies a class of the input image by using the identification model. The identification model has been trained in advance on the basis of training data (base training image) of an image taken in a certain facility (facility A) in the initial state, for example.

The training unit 207 executes machine learning of the identification model by using training images for training the identification model of the identification unit 206. Here, the training image is a base training image and/or an additional training image. In addition, the training unit 207 executes prior training on the image state feature calculation model of the image state feature calculation unit 202, the form feature calculation model of the form feature calculation unit 203, and the image generation model of the image generation unit 205. Details of this prior training will be described later. The training unit 207 is an example of a perturbation image generation unit, an image generation training unit, an identification model training unit, and an additional training image determination unit.

The output unit 208 outputs training results of the identification unit 206 trained by the training unit 207 (information including a parameter of an identification model and information of identification accuracy, for example), an image generated by the image generation unit 205, the additional training image and the like. In this Embodiment, the output unit 208 outputs (displays) a result display screen 801 (see Fig. 8), an additional training image display screen 901 (see Fig. 9), and a correct value configuration screen 1001 (see Fig. 10). The output unit 208 is an example of a training result output unit, a candidate image output unit, a transition information output unit, an additional training image output unit, a class information receiving unit, and a storage control unit.

Subsequently, the prior training with respect to the image state feature calculation unit 202, the form feature calculation unit 203, and the image generation unit 205 will be explained.

Fig. 4 is a diagram for explaining the prior training with respect to the image state feature calculation unit, the form feature calculation unit, and the image generation unit according to the Embodiment.

First, the training unit 207 generates a perturbation image 403 (input image A') by giving perturbation (slight fluctuation) to the image state with respect to one image 401 (input image A) of the facility A. Here, the input image A' is an image whose form is not changed but only the image state is changed with respect to the input image A.

Subsequently, the training unit 207 causes the image state feature calculation unit 202 to calculate an image state feature 404 (image state feature A) of the input image A and to calculate an image state feature 406 (image state feature A') of the input image A'. It is to be noted that the calculated image state feature 406 of the input image A' associated with the input image may be stored in the storage device 113. In addition, the training unit 207 causes the form feature calculation unit 203 to calculate a form feature 405 (form feature A) of the input image A and a form feature 407 (form feature A') of the input image A'.

Subsequently, the training unit 207 causes an image state feature A and a form feature A to be input by the image generation unit 205 so as to generate an output image 408 (output image A: Image corresponding to base image) corresponding to the input image A, causes the image state feature A' and the form feature A' to be input and causes an output image 409 (output image A': Image corresponding to perturbation image) corresponding to the input image A' to be generated.

The training unit 207 generates a plurality of perturbation images for one image and executes the above-described processing, for example, and moreover, executes the similar processing with the plurality of images taken in the facility A as targets.

Then, the training unit 207 trains the image state feature calculation unit 202, the form feature calculation unit 203, and the image generation unit 205 by using the image and the feature calculated in the processing as above such that the input image A and the output image A get closer to each other, the input image A' and the output image A' get closer to each other, and the form feature A and the form feature A' become values close to each other. As a specific example, the training unit 207 trains the image state feature calculation unit 202, the form feature calculation unit 203, and the image generation unit 205 so that a value of Loss in the following expression (1) becomes smaller.

$$\mathrm{Loss} = \mathrm{Loss0A} + \mathrm{Loss0B} + \mathrm{Loss1} \ldots (1)$$

```
Loss0A = MSE(input image A, output image A)

Loss0B = MSE(input image A', output image A')

Loss1 =MSE(form feature A, form feature A')
```

Here, MSE() indicates a function for calculating a mean square error between the elements in the ().

According to the image state feature calculation unit 202, the form feature calculation unit 203, and the image generation unit 205 shown in Fig. 4, for which prior training is performed, an image close to the original image can be generated by the image state feature and the form feature, and by changing only the image state feature, an image in which only an image state has changed without changing the form of a subject in the image can be generated appropriately.

Subsequently, additional training image determination processing will be explained.

Fig. 5 is a diagram for explaining additional training image determination processing according to the Embodiment.

The image state feature control unit 204 acquires an image state feature 501 (image state feature L: First image state feature) based on an image taken in the facility A (base image) from the memory 112. Here, as the image state feature L, it may be an average value of the image state feature of a plurality of images taken in the facility A, for example.

In addition, the image state feature control unit 204 acquires an image state feature 502 (image state feature M: Second image state feature) of an image (target image) taken in the facility B to be a target of the additional training from the image state feature calculation unit 202.

In addition, the image state feature control unit 204 receives a deformation coefficient 503 from the training unit 207. Here, the training unit 207 gradually changes deformation coefficient from 0 to 1.0, for example.

The image state feature control unit 204 executes deformation processing (505) that calculates an after-deformation image state feature 506 (third image state feature) which is a value between the image state feature M and the image state feature L on the basis of the image state feature L and the image state feature M. In this Embodiment, the image state feature control unit 204 calculates the after-deformation image state feature 506 on the basis of the image state feature L, the image state feature M, and the deformation coefficient. For example, the image state feature control unit 204 calculates the after-deformation image state feature 506 by the following expression (2). Here, when the deformation coefficient is 0, it means the image state feature of the target image, while when the deformation coefficient is 1.0, it means the image state feature of the base image.

After-deformation image state feature = Image state feature M $\times$ (1 - Deformation coefficient) + image state feature L $\times$ Deformation coefficient

(2)

The image state feature control unit 204 outputs the after-deformation image state feature 506 to the image generation unit 205.

As a result, the image generation unit 205 generates an image (candidate image) to be a candidate of an additional training image on the basis of the after-deformation image state feature and the form feature (first form feature) of the image taken in the facility B, which is output from the form feature calculation unit 203, and the identification unit 206 identifies the candidate image and notifies the result to the training unit 207.

The training unit 207 determines whether or not the identification result by the identification unit 206 has changed from the candidate image generated immediately before with respect to each of the candidate images generated by changing the deformation coefficient. As a result, when the identification result has changed, the training unit 207 determines the candidate image generated by the deformation coefficient before (immediately before) the identification result is changed as the additional training image and stores it in the storage device 113. As described above, the image generated by the deformation coefficient immediately before the identification result is changed means that it is an image relatively closer to the identification surface, and by using this additional training image, the identification surface can be enlarged appropriately, while over-training is suppressed. It is to be noted that, when the identification result is not changed even if the deformation coefficient is changed, the training unit 207 does not determine these candidate images as the additional training images.

Subsequently, a specific example on an example of an image generated by the image generation unit 205, when the deformation coefficient is changed, will be explained.

Fig. 6A is a diagram illustrating each image when contrast of an image is affected by the change of the deformation coefficient according to the Embodiment. Fig. 6B is a diagram illustrating each image when a brightness value of an image is affected by the change of the deformation coefficient according to the Embodiment. Fig. 6C is a diagram illustrating each image when a degree of blur of an image is affected by the change of the deformation coefficient according to the Embodiment. It is to be noted that the image with the deformation coefficient of 0.0 corresponds to a target image, and the image with the deformation coefficient of 1.0 corresponds to the base image.

If the image state feature has become a feature with a strong influence of the contrast of the image, when the deformation coefficient is changed from 0.0 to 1.0 in stages, as shown in Fig. 6A, the contrast gradually changes so as to get closer to the base image. In addition, if the image state feature has become such a feature with a strong influence of the brightness value of the image, as shown in Fig. 6B, the brightness value changes so as to gradually get closer to the base image. In addition, if the image state feature has become such a feature with a strong influence of the degree of blur of the image, as shown in Fig. 6C, the degree of blur gradually changes so as to gradually get closer to the base image.

Subsequently, a relation between an image acquired by the change of the deformation coefficient and an identification surface will be explained.

Fig. 7 is a diagram illustrating a relation between an image acquired by the change of the deformation coefficient and the identification surface according to the Embodiment.

For example, when the deformation coefficient is increased in stages with respect to the target image 304, the image changes so as to get closer to the base image 701. Here, when the identification surface 303 is between the target image 304 and the base image 701, by changing the deformation coefficient, an identification result on the candidate image changes between any of the deformation coefficients. In the example in Fig. 7, the identification result with respect to the candidate image changes between the deformation coefficient 0.4 and the deformation coefficient 0.6. It means that the identification surface 303 exists in a part where this identification result changes as shown in Fig. 7. In this Embodiment, the training unit 207 determines the candidate image corresponding to the deformation coefficient (0.4 in this example) immediately before the part in which the identification result changes as the additional training image. Since this image has an image state closer to the base image 701 than the target image 304, the influence on the identification surface 303 can be suppressed as compared with the additional training with the target image 304. That is, over-training can be suppressed.

Subsequently, a result display screen 801 will be explained.

Fig. 8 is a diagram illustrating a result display screen according to the Embodiment.

The result display screen 801 is such a screen displayed by the output unit 208, for example, when additional training is performed, and includes an identification-accuracy transition display area 802 and a number of trained images transition display area 803.

On the identification-accuracy transition display area 802, an identification-accuracy transition graph with the number of additional training times as a horizontal axis and the identification accuracy as a vertical axis is displayed. By causing the identification unit 206 to execute identification processing with respect to the evaluation image after the additional training is performed by the training unit 207, for example, and by storing the evaluation result in a storage device or the like, and on the basis of the evaluation result, this graph is generated by the output unit 208. In this Embodiment, as the identification accuracy transition graph, a graph of the identification accuracy with respect to the image of each facility (for each image acquisition condition), for example, an identification accuracy graph with respect to the image taken in the facility A and an identification accuracy graph with respect to the image taken in the facility B are included. According to these graphs, a change in the identification accuracy with respect to the image of the facility A by the additional training can be grasped appropriately, and whether or not the additional training gives an adverse effect to the identification accuracy of the image of the facility A can be determined appropriately.

On the number of trained images transition display area 803, a number of trained images transition graph with the number of additional training times as a horizontal axis and the number of trained images as a vertical axis is displayed. By storing the number of images of the total of the number of base training images and the number of additional training images at each of the additional training, for example, this graph can be generated on the basis of the number of images.

Subsequently, the additional training image display screen 901 will be explained.

Fig. 9 is a diagram illustrating an additional training image display screen according to the Embodiment.

The additional training image display screen 901 is a screen displayed by the output unit 208 when the additional training image is determined, for example, and includes a candidate image display area 902 and an additional training image instruction icon 903.

In the candidate image display area 902, a plurality of deformation coefficients and the candidate images generated in correspondence with the deformation coefficients are displayed. The additional training image instruction icon 903 is an icon illustrating an image determined as an additional training image in the candidate images displayed in the candidate image display area 902. It is to be noted that, in this Embodiment, it is configured such that the additional training image is determined by the training unit 207 on the basis of internal processing, but this is not limiting, and the training unit 207 may determine the candidate image selected by the user with the input device 120 as the additional training image from the candidate images displayed in the candidate image display area 902, for example.

Subsequently, a correct value configuration screen 1001 will be explained.

Fig. 10 is a diagram illustrating a correct-value configuration screen according to the Embodiment.

The correct value configuration screen 1001 is a screen displayed by the output unit 208 after the additional training image is determined, for example, and includes an additional training image display area 1002, an identification-result display area 1003, a correct-value input area 1004, a display-image change button 1005, and a registration button 1006.

The additional training image display area 1002 is an area in which an additional training image is displayed. The identification-result display area 1003 is an area in which an identification result of the additional training image is displayed. The correct-value input area 1004 is an area in which an input of a correct value (class information) indicating a class into which the additional training image is classified is received. The display-image change button 1005 is a button that switches an additional training image displayed in the additional training image display area 1002. The registration button 1006 is a button that receives an instruction to register a correct value corresponding to the additional training image displayed in the additional training image display area 1002. When the registration button 1006 is pressed down, the output unit 208 associates a label of a correct value to the additional training image displayed in the additional training image display area 1002 and causes it to be stored in the storage device 113.

It is to be noted that the present invention is not limited to the above-described Embodiment but is capable of being embodied with appropriate deformation within a range not departing from the gist of the present invention.

For example, in the above-described Embodiment, by changing the deformation coefficient, the candidate image is gradually brought closer to the base image from the target image, and the candidate image immediately before the identification result of the image is changed is made an additional training image, but the present invention is not limited to that, and the image in an image state between the candidate image and the target image may be made an additional training image, for example, or an image corresponding to the deformation coefficient within a predetermined range with respect to the range of the deformation coefficient by which the identification result was changed may be made an additional training image.

In addition, in the above-described Embodiment, the example in which the additional training image is generated is illustrated, but it may be so configured that an evaluation image to be added is generated. For example, it is preferable that the image state feature calculation unit 202 is configured to calculate an image state feature (fourth image state feature) based on the image state of the evaluation image of the storage device (an example of the evaluation image storage unit), the form feature calculation unit 203 is configured to calculate a form feature (second form feature) based on the form of a subject of the evaluation image, the image state feature control unit 204 is configured to generate a new image state feature (fifth image state feature) by adjusting the image state feature (fourth image state feature), and the image generation unit 205 is configured to generate a new evaluation image on the basis of the fifth image state feature and the second form feature. It is to be noted that the form itself of the new evaluation image is the same as the original evaluation image and thus, a label of the new evaluation image may be the same as the original evaluation image.

In addition, in the above-described Embodiment, as an example under the first image acquisition condition and under the second image acquisition condition, such a case that the facilities where the images are taken are different is illustrated, but the present invention is not limited to that, and it is only necessary to such a case that the image acquisition condition is different. For example, when an image for inspection target for pathologic examination of germs and cells is to be an identification target by the identification unit, since a state of an inspection target is different depending on an organization or a staff generating the inspection target, and a state of an image obtained by taking this inspection target is also different, this case can be also considered to be a case in which the image acquisition condition is different. In this case, for example, it may be so configured that an image obtained by taking an inspection target generated by a staff A is assumed to be an image under the first image acquisition condition, and an image obtained by taking an inspection target generated by a staff B is assumed to be an image under the second image acquisition condition. In addition, when cameras for taking are different, too, it may be assumed to be a case in which the image acquisition condition is different, respectively.

In addition, in the above-described Embodiment, it may be so configured that a part or the whole of the processing executed by the processor is executed by a hardware circuit. Furthermore, the program in the above-described Embodiment may be installed from a program source. The program source may be a program distribution server or a recording medium (a portable recording medium, for example).

[Reference Signs List]

100    Machine learning system
101    Machine learning device
111    Processor
112    Memory
113    Storage device
114    Bus

120     Input device
121     Display device
201     Image input unit
202     Image state feature calculation unit
203     Portable information calculation unit
204     Image state feature control unit
205     Image generation unit
206     Identification unit
207     Training unit
208     Output unit

**Claims**

1.  A machine learning support device for generating an additional training image for performing additional training of an identification model that identifies a class into which an image is classified, wherein
    the identification model is trained by using a plurality of base images acquired under a first image acquisition condition, the machine learning support device comprising:

    a receiving unit that receives an additional image acquired under a second image acquisition condition to be an identification target by the identification model;
    an image state feature calculation unit that calculates a second image state feature on the basis of an image state of the additional image;
    an image state feature control unit that generates one or more third image state features, which are features between a first image state feature based on an image state of the base image and the second image state feature;
    a form feature calculation unit that calculates a first form feature based on a form of a subject of the additional image;
    an image generation unit that generates one or more candidate images on the basis of one or more of the third image state features and the first form feature; and
    an additional training image determination unit that determines at least one of the candidate images as an additional training image, wherein
    the image state includes at least one state of brightness, contrast, color (hue and/or chroma), a degree of blur, a noise amount, and resolution of an image.

2.  The machine learning support device according to claim 1, further comprising:

    an identification unit that identifies a class into which an image is classified by using the identification model, wherein
    the additional training image determination unit is configured to:

    cause the image state feature control unit to sequentially change the third image state feature such as to become a value close to the first image state feature in an order from a value close to the second image state feature;
    cause the image generation unit to sequentially generate the candidate image on the basis of the third image state feature and the form feature;
    cause the identification unit to identify a class into which the candidate image is classified; and
    on the basis of an identification result of the identification unit, determine at least one of the candidate images as the additional training image.

3.  The machine learning support device according to claim 2, wherein
    the additional training image determination unit is configured to determine a candidate image that was generated immediately before the candidate image whose identification result by the identification unit has changed as the additional training image.

4.  The machine learning support device according to claim 1, further comprising:

    a perturbation image generation unit that generates a perturbation image which perturbated an image state with respect to each of a plurality of the base images acquired under the first image acquisition condition; and

an image generation training unit that performs machine learning with respect to the image state feature calculation unit, the form feature calculation unit, and the image generation unit such that:

(A) the base image and an image corresponding to a base image output by the image generation unit on the basis of an image state feature output by the image state feature calculation unit with respect to the base image and form feature information output by the form feature calculation unit with respect to the base image are similar to each other;

(B) the perturbation image and an image corresponding to a perturbation image output by the image generation unit from an image state feature output by the image state feature calculation unit with respect to the perturbation image and form feature information output by the form feature calculation unit with respect to the perturbation image are similar to each other; and

(C) form feature information output by the form feature calculation unit with respect to the base image and form feature information output by the form feature calculation unit with respect to the perturbation image are similar to each other.

5. The machine learning support device according to claim 1, further comprising:
an identification model training unit that performs training of the identification model by using the additional training image.

6. The machine learning support device according to claim 5, further comprising:
a training result output unit that outputs a training result by the identification model training unit.

7. The machine learning support device according to claim 1, further comprising:
an additional training image output unit that outputs the additional training image identifiably.

8. The machine learning support device according to claim 1, further comprising:
a candidate image output unit that outputs one or more of the candidate images.

9. The machine learning support device according to claim 1, further comprising:

a receiving unit that receives selection of an image to be the additional training image from the one or more of the candidate images from a user, wherein
the additional training image determination unit is configured to determine a candidate image that received the selection as the additional training image.

10. The machine learning support device according to claim 1, further comprising:

a class information receiving unit that causes the additional training image to be displayed and receives class information indicating a class into which the additional training image is classified from a user; and
a storage control unit that stores the additional training image associated with the class information.

11. The machine learning support device according to claim 1, further comprising:
a transition information output unit that causes transition information related to transition of identification accuracy due to performance of additional training of identification processing by the identification unit and/or the number of training images to be displayed.

12. The machine learning support device according to claim 11, wherein
the transition information output unit causes transition information on transition of identification accuracy on an image for each image acquisition condition of identification processing by the identification unit to be displayed.

13. The machine learning support device according to claim 1, further comprising:

an evaluation image storage unit that stores a plurality of evaluation images for evaluating the identification model, wherein
the image state feature calculation unit is configured to calculate a fourth image state feature based on an image state of the evaluation image;
the form feature calculation unit is configured to calculate a second form feature based on a form of a subject of the evaluation image;

the image state feature control unit is configured to generate a fifth image state feature by adjusting the fourth image state feature; and

the image generation unit is configured to generate a new evaluation image on the basis of the fifth image state feature and the second form feature.

14. A machine learning support method by a machine learning support device which generates an additional training image for performing additional training of an identification model that identifies a class into which an image is classified, wherein

the identification model has been trained by using a plurality of base images acquired under a first image acquisition condition, the method comprising;

receiving an additional image acquired under a second image acquisition condition to be an identification target by the identification model;

calculating a second image state feature based on an image state of the additional image;

generating one or more third image state feature which are feature between a first image state feature based on an image state of the base image and the second image state feature;

calculating a first form feature based on a form of a subject of the additional image; and

generating one or more candidate images on the basis of one or more of the third image state feature and the first form feature;

determining at least one of the candidate images as an additional training image; wherein

the image state includes at least one state of brightness, contrast, color (hue and/or chroma), a degree of blur, a noise amount, and resolution of an image.

15. A machine learning support program to be executed by a computer that generates an additional training image for performing additional training of an identification model for identifying a class into which an image is classified, wherein

the identification model has been trained by using a plurality of base images acquired under a first image acquisition condition;

the machine learning support program causes the computer to function as:

a receiving unit that receives an additional image acquired under a second image acquisition condition to be an identification target by the identification model;

an image state feature calculation unit that calculates a second image state feature based on an image state of the additional image;

an image state feature control unit that generates one or more third image state feature, which are feature between a first image state feature based on an image state of the base image and the second image state feature;

a form feature calculation unit that calculates a first form feature based on a form of a subject of the additional image;

an image generation unit that generates one or more candidate images on the basis of one or more of the third image state feature and the first form feature; and

an additional training image determination unit that determines at least one of the candidate images as an additional training image, wherein

the image state includes at least one state of brightness, contrast, color (hue and/or chroma), a degree of blur, a noise amount, and resolution of an image.

# Fig. 1A

Fig. 1B

## Fig. 1C

# Fig. 1D

Facility A

Facility B

Class a

301

310

307

303

311

Class b

302

308

# Fig. 2

<u>100</u>

# Fig. 3

Image (group)

101

201 **Image input unit**

202 **Image state feature calculation unit**

203 **Form feature calculation unit**

204 **Image state feature control unit**

205 **Image generation unit**

206 **Identification unit**

207 **Training unit**

208 **Output unit**

Training result, additional training sample (group), generated image

# Fig. 4

Fig. 5

**112** Memory

**202** Image state feature calculation unit

**204** Image state feature control unit

**501** Image state feature L

**502** Image state feature M

**503** Deformation coefficient

**505** Deformation processing

**506** After-deformation image state feature

**207** Training unit

**205** Image generation unit

## Fig. 6A

| Deformation coefficient | 0.0 | 0.25 | 0.5 | 0.75 | 1.0 |
| --- | --- | --- | --- | --- | --- |
| Generated image | | | | | |

## Fig. 6B

| Deformation coefficient | 0.0 | 0.25 | 0.5 | 0.75 | 1.0 |
| --- | --- | --- | --- | --- | --- |
| Generated image | | | | | |

## Fig. 6C

| Deformation coefficient | 0.0 | 0.25 | 0.5 | 0.75 | 1.0 |
| --- | --- | --- | --- | --- | --- |
| Generated image | | | | | |

Fig. 7

## Fig. 8

801

802   Identification accuracy

803   Number of trained images

O Facility A
● Facility B

Number of additional
training times

Number of additional
training times

Fig. 9

# Fig. 10

1001

1002

1003

Identification result — a

1004

Correct value

1005

Before   Next

1006

Registration

## INTERNATIONAL SEARCH REPORT

| | International application No. |
|---|---|
| | **PCT/JP2024/029941** |

| A. | CLASSIFICATION OF SUBJECT MATTER |
|---|---|

***G06T 7/00***(2017.01)i; ***G06T 7/11***(2017.01)i; ***G06V 10/82***(2022.01)i
FI:   G06T7/00 350B; G06V10/82; G06T7/11

According to International Patent Classification (IPC) or to both national classification and IPC

| B. | FIELDS SEARCHED |
|---|---|

Minimum documentation searched (classification system followed by classification symbols)

G06F18/00 - 18/40, G06N 3/00 - 99/00, G06T 7/00 - 7/90, G06V10/00 - 20/90, G06V30/418, G06V40/16, G06V40/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 野村行弘　外7名，ＣＡＤソフトウェアの臨床応用／評価／追加学習を目的としたＷｅｂベースのＣＡＤ実行環境－遠隔読影環境による多施設臨床使用での追加学習－, 電子情報通信学会技術研究報告, 12 January 2012, vol. 111, no. 389, pp. 23-28, (NOMURA, Yukihiro et al., Web-based CAD server for clinical use, evaluation, and incremental learning : Incremental learning of CAD software based on multicenter trial in teleradiology environment, IEICE Technical Report)<br>section 1 | 1-15 |
| A | JP 2018-112996 A (CANON KABUSHIKI KAISHA) 19 July 2018 (2018-07-19)<br>paragraphs [0001], [0006]-[0007], [0011]-[0012] | 1-15 |
| A | JP 2022-155690 A (CANON KABUSHIKI KAISHA) 14 October 2022 (2022-10-14)<br>paragraphs [0016]-[0017], [0034], [0076]-[0077], [0233], fig. 1, 3 | 1-15 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/029941**

| Patent document cited in search report | | | Publication date (day/month/year) | Patent family member(s) | | | Publication date (day/month/year) |
|---|---|---|---|---|---|---|---|
| JP | 2018-112996 | A | 19 July 2018 | US 2018/0204067 A1 paragraphs [0001], [0004]-[0005], [0018]-[0019] CN 108304783 A | | | |
| JP | 2022-155690 | A | 14 October 2022 | (Family: none) | | | |

Form PCT/ISA/210 (patent family annex) (July 2022)

**EP 4 787 293 A1**

**Patent documents cited in the description**

- JP 2023012094 A

- JP 2020160804 A